(19) Europäisches Patentamt
European Patent Office
Office européen des brevets

(11) EP 1 700 773 B1

(12) EUROPEAN PATENT SPECIFICATION

(45) Date of publication and mention of the grant of the patent:
**07.05.2008 Bulletin 2008/19**

(51) Int Cl.:
***B62D 5/04*** *(2006.01)* ***B62D 5/00*** *(2006.01)*
***B62D 6/00*** *(2006.01)*

(21) Application number: **05005301.6**

(22) Date of filing: **10.03.2005**

(54) **Variable steering ratio system and steering method**

Variable Lenkübersetzung und Lenkmethode

Système de direction à démultiplication variable et sa méthode de mise en oeuvre

(84) Designated Contracting States:
**DE GB SE**

(43) Date of publication of application:
**13.09.2006 Bulletin 2006/37**

(73) Proprietor: **Ford Global Technologies, LLC**
**Dearborn, MI 48126 (US)**

(72) Inventor: **Hultén, Johan**
**413 16 Göteborg (SE)**

(74) Representative: **Hammond, Andrew David et al**
**Valea AB**
**Lindholmspiren 5**
**417 56 Göteborg (SE)**

(56) References cited:
**EP-A- 1 325 857**
**EP-A- 1 394 015**
**US-B1- 6 523 638**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 700 773 B1

## Description

### Technical field

The present invention relates to a system for controllable steering response in an automotive vehicle and in particular system for controllable steering response in an automotive vehicle having a steering system where a ratio i between a turn angle of the steerable road wheels of said automotive vehicle and a steering wheel angle can be altered by means of a differential angle actuator in accordance with the preamble of claim 1.

The present invention also relates to a method for providing controllable steering response in an automotive vehicle having a steering system where a ratio i between a turn angle of the steerable road wheels of said automotive vehicle and a steering wheel angle can be altered by means of a differential angle actuator in accordance with the preamble of claim 14.

### Background of the invention

US 6 523 638 relates to a steering apparatus for vehicle provided with a so-called transmission ratio varying mechanism to permit alteration of a transmission ratio of turn angle of wheels to steering angle of a steering wheel. This steering apparatus for a vehicle comprises a transmission ratio varying mechanism capable of varying a transmission ratio of rotational angle of an output shaft to an input shaft connected to a steering wheel; and a steering control device that controls the transmission ratio, setting the transmission ratio by correcting an original transmission ratio when the difference between real and target rotational angles of the output shaft is greater than a predetermined value, the corrected transmission ratio being equal to or less than the original transmission ratio.

EP A 1 394 015 relates to an electric power steering apparatus having a steering system capable of flexibly setting a relationship between a steering angle of a steering wheel and a wheel angle of a tire. A first motor controls a steering reaction force exerted on the steering wheel. An on-center region determination section determines whether the steering wheel is in a position of an on-center region. A tire reaction force torque detection section detects a tire reaction force torque transferred from the tire. A control section calculates a steering torque based on the tire reaction force torque and a torque gain. This torque is detected by the tire reaction force torque detection section. The control section controls the first motor to exert the steering reaction force corresponding to the above calculated steering torque on the steering wheel. This control section also sets the torque gain in case of determining that the steering wheel is in the position of the on-center region larger than the torque gain in case of determining that the steering wheel is not in the position of the on-center region.

EP A 1 325 857 relates to a variable steering ratio mechanism which varies the ratio R of the steering angle $\ominus_s$ of a steering wheel to a road wheel steer angle $\ominus_w$. A control unit controls the variable steering ratio mechanism so that the steering ratio R is kept constant irrespective of the vehicle speed V when the steering angle $\ominus_s$ is less than or equal to a predetermined angle $\ominus_1$ substantially corresponding to a neutral position of the steering wheel. In particular the control unit may switch the variable steering ratio mechanism to a non-control state to maintain the steering ratio R at a structurally-determined steering ratio of the variable steering ratio mechanism kept in the non-control state when $\ominus_s \leq \ominus_1$. The control unit may have a processor programmed to (a) execute a fixed steering ratio control mode, in which R is kept constant irrespective of V, when $\ominus_s \leq \ominus_1$, and (b) executing a vehicle-speed dependent steering ratio control mode, in which a $\ominus_s$ versus $\ominus_w$ characteristic varies depending on V, when $\ominus_s > \ominus_1$.

A problem with the prior art steering apparatus is that, although it compensates for the difference between the turn angle of the wheels and the steering angle of the steering wheel by reducing the transmission ratio when the actuators are unable to follow a rapid steering input, it will continue to compensate until the difference is eliminated, independent of any new steering angle of the steering, wheel causing a lag between the requested turn angle of the wheels and the actual turn angle of the wheels and sometimes also a conflict when the wheels are still turning in one direction as the steering wheel is actually being turned in the opposite direction.

### Summary of the invention

One object of the invention is to provide an improved system for controllable steering response in an automotive vehicle and in particular a system for controllable steering response in an automotive vehicle having a steering system where a ratio *i* between a turn angle of the steerable road wheels of said automotive vehicle and a steering wheel angle can be altered by means of a differential angle actuator.

This object is achieved by the system as claimed in claim 1.

Thanks to the provision of control of said differential angle actuator being based on calculations performed by means of an algorithm for determining the change in said ratio i over discrete time steps, wherein the change in ratio for one such time step is

$$i_{t+1} = \max(i_{min}; \min(i_{\max}; i_t + \frac{i_{t\,\arg et} - i_t}{\varphi_{t+1}}\Delta\varphi + \sum_{k=1}^{n}\frac{\partial i}{\partial x_k}\Delta x_k - \Delta i)),$$

where k is the number of the steering ratio parameter, n is the number of the last steering ratio parameter, and x is the steering ratio parameter, and the target steering ratio $i_{target,}$ the maximum allowed ratio $i_{max}$ and the minimum allowed ratio $i_{min}$ are functions of the parameters vehicle speed and the derivative of said vehicle speed, and any measure indicating steering position within the steering system and the derivative of said measure, the lag between requested steerable road wheel angles and actual steerable road wheel angles may be reduced and the occurrence of any conflict when the steerable road wheels are still turning in one direction as the steering wheel is actually being turned in the opposite direction eliminated.

A further object of the invention is to provide an improved method for controllable steering response in an automotive vehicle and in particular a method for controllable steering response in an automotive vehicle having a steering system where a ratio *i* between a turn angle of the steerable road wheels of said automotive vehicle and a steering wheel angle can be altered by means of a differential angle actuator.

This object is achieved by the method as claimed in claim 14.

Preferred embodiments are listed in the dependent claims.

## Description of drawings

In the following, the invention will be described in greater detail by way of example only with reference to attached drawings, in which

Fig. 1 is a schematic illustration of a steering ratio that is dependent on vehicle speed,

Fig. 2 illustrates schematically a system for controllable steering response in an automotive vehicle in accordance with the present invention,

Fig. 3 is a schematic illustration of one problem encountered during a slalom maneuver using prior art systems without any compensation for the abilities of the actuators of the vehicle steering sytem, where the actual road wheel angle in this case is still increasing for a short time period while the requested road wheel angle is decreasing,

Fig. 4 illustrates schematically the slalom maneuver of figure 3 with compensation for the abilities of the actuators of the vehicle steering system in accordance with the present invention,

Fig. 5 exemplifies schematically how the algorithm relied on by the system in accordance with the present invention works,

Fig. 6 further exemplifies schematically how the algorithm relied on by the system in accordance with the present invention works,

Fig. 7 illustrates schematically how the algorithm relied on by the system in accordance with the present invention handles changes in steering wheel movement direction,

Fig. 8 illustrates schematically how the algorithm relied on by the system in accordance with the present invention handles movement of the steering wheel through a center angle.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

## Description of embodiments

A variable steering ratio in road vehicles is one of the functions enabled by a differential angle actuator, i.e. an actuator that may add a delta angle to the steering column of the road vehicle. Thus, the turn angle of the wheels of the road vehicle is not only given by the steering wheel angle. The ratio between the turn angle of the wheels of the road vehicle and the steering wheel angle may then be altered. The steering ratio is defined as the quotient between the turn angle of the road wheels of the vehicle and the steering wheel angle. The most obvious function that may be achieved is a steering ratio that is dependent on the vehicle speed, as illustrated by the full line graph of figure 1.

At low speed, the response of the vehicle, i.e. the ratio between the turn angle of the wheels of the road vehicle and the steering wheel angle is increased, reducing the efforts to e.g. park the vehicle. On the other hand, the response of the vehicle at high speed is reduced, i.e. the ratio between the turn angle of the wheels of the road vehicle and the steering wheel angle is reduced, so that the vehicle feels less nervous and thereby more stable on the road. The dashed

line graph of figure 1 illustrates a case of constant ratio.

The ratio may be dependent on other parameters such as e.g. the steering wheel angle. Furthermore, the differential angle actuator may be used to control the turn angle of the wheels in a way that helps the driver to maintain the wanted path, e.g. Yaw Control, Side Wind Compensation, etc.

These functions may also be achieved by Steer by Wire hardware (SbW). In such a Steer by Wire system, the steering wheel is decoupled from the steering rack. The movement of the rack is then controlled electronically. Rear wheel steering may also be used in combination with controllable front wheel angle (by SbW or a differential angle actuator) or alone. Similarly, the functions may be achieved by means of individual wheel corners, i.e. individually controllable front wheel angles and/or individually controllable rear wheel angles.

All these means of controlling the vehicle response by steering are from now on called Controllable Steering Response (CSR). The CSR actuator is the hardware used to achieve a controllable steering response. In this more generic situation, the steering ratio may be defined as e.g. the quotient between the nominal curvature followed by the vehicle on the road and the steering wheel angle.

Figure 2 illustrates schematically a system for controllable steering response in an automotive vehicle in accordance with the present invention. The system comprises a Controllable Steering Response actuator 13, an electronic power assisted steering actuator 14, a steering wheel 15, a steering column 16 and a steering arm 17.

The increased agility provided by controllable steering response contributes to a positive driving experience. But, on the other hand, the driver may request much greater steerable wheel angle change rates than with a standard vehicle. The increased steerable wheel angle change rate requests may result in a series of problems.

The differential angle actuator will normally have limitations in its possibility to add an angle. Therefore, there will, for high steering wheel velocities, be a significant difference between the requested road wheel angle and the actual road wheel angle. This is called steering lag. In figure 3, a slalom maneuver is simulated.

Figure 3 illustrates two problems, firstly that the actual road wheel angle will be smaller than the requested road wheel angle and secondly that there is a time lag between them. The time lag is the most annoying problem of the two. The actual road wheel angle is in this case still increasing for 0.16 s while the requested road wheel angle is decreasing. It is even so that it is a safety risk when the wheel is actually turning in the opposite direction to the requested direction.

The CSR actuator generates some audible noise. While the steering wheel is turned, the acceptance for audible noise is greater than when the steering wheel is stationary. Therefore, lag is also a noise problem, as the audible noise will be generated by the CSR actuator even though the steering wheel is stationary during the lag period.

Catch Up is the term used for the problem of not having assistance for high steering wheel velocities. Assistance is a force added to the steering rack to make the steering operation easier. Common assistance levels are approximately such that 90 % of the rack force is eliminated by the Power Assisted Steering (PAS) system. This is usually provided by hydraulics (HPAS). Electric assistance (EPAS) is now emerging, especially on smaller passenger cars. The HPAS system requires an oil flow to work, and with increasing steering ratio, i.e. ratio between road wheel angle and steering wheel angle, the oil flow must be increased approximately in proportion to the increase in steering ratio in order not to suffer from the Catch Up problem. If the oil flow is not high enough, the assistance will diminish. This happens rapidly, and is therefore a significant problem. For the EPAS system, the electric current sets the limit, and the result is similar in the case of limited current. An adaptation to the increased need of assistance is difficult. As for the oil pump of the HPAS system, the increased flow requirement will result in increased cost as well as cause packaging problems as a larger pump requires more space.

The variable steering ratio is normally set so that the ratio is greater at low vehicle speeds, as illustrated by the full line graph of figure 1. By doing so, the road wheels will turn during retardation, given that the steering wheel is kept at a constant non-zero angle. However, if the road wheels are already at their end stops, the steering wheel angle will be forced to decrease by the system.

These problems may all be solved by taking the abilities of the actuators (CSR and PAS actuators) into account. The ratio may then be adapted to the ability of the system. The abilities of the steering angle control and steering power assistance actuators treated here are as follows: the CSR Actuator has the Ability of maximum delta angular velocity in positive and negative direction respectively, and the PAS Actuator has the ability of maximum rack velocity in positive and negative direction respectively as well as maximum rack position in the positive and negative direction respectively.

Variable Steering Ratio may be implemented so that the driver may choose different steering modes (ratio characteristics) via buttons, menus, etc. The traditional way of synchronizing between two such modes is to introduce restrictions on when a mode change is enabled. It is common to enable mode change around zero steering wheel angle and for a vehicle velocity under a certain value. Another way is to use a smooth transition between the two modes, i.e. the modes are mixed during the transition starting with 100 % of the first and continuously moving to 100 % of the other. These two methods may be combined to ease the restrictions on when mode changes are enabled. However, restrictions are still needed.

With the invention, no restrictions on mode changes are required. The algorithm handles the ratio in such a

way that the change rate in an outwards steering direction is according to the ratio corresponding to the new mode (i.e. the change in road wheel angles or curvature over the steering wheel angle change is according to the new mode) and in the inwards steering direction, the change rate is such that the road wheel angles will be zero for a zero steering wheel angle.

The steering ratio is dependent on the vehicle velocity. The ratio is such that the responsiveness is greater at low speeds compared to at high speeds. That means that during a panic braking operation while turning, the response is continuously increasing if only the vehicle speed sensitivity is taken into consideration. The responsiveness of the vehicle will increase in a critical situation and therefore compensation to that effect is included in the algorithm. The increase in steering ratio during a retardation exceeding a threshold value can be reduced. The algorithm takes care of the recovery to the target steering ratio.

In figure 4, the effect of the solution to the problem illustrated in figure 3 is shown.

In figure 4, the lines depicting the request and the actual road wheel angles are closer together, i.e. lag is reduced, and the area where the requested and actual angular velocity are in opposite direction is eliminated completely.

The algorithm behind the solution is exemplified in figure 5 and figure 6. The abbreviations used are Steering Wheel Angle (SWA) and Road Wheel Angle (RWA). In the case of other concepts (e.g. as mentioned above), RWA may be switched to e.g. Curvature followed by the vehicle on the road.

In figure 5, for the steering operation illustrated by arrow 1, the requested road wheel angle is within the ability of the AFS actuator and the ratio is not limited. For the steering operation illustrated by arrow 2, the requested road wheel angular velocity is above the ability of the CSR actuator and is reduced. The ratio is reduced to reflect the availability signal sent out from the arbitration derived from the algorithm. For the steering operation illustrated by arrow 3, the requested road wheel angle is within the ability of the CSR actuator again and thus the abilities are acceptable, and the ratio follows the same slope (illustrated by the thin line parallel to the dashed target ratio line) as it does for the default ratio. The relation between steering wheel angle and road wheel angle is parallel to the target ratio. There is also a minimum ratio that the current ratio never may go below.

In figure 6, it is illustrated what happens if the ratio is reduced, and the steering wheel is turned towards the center angular position, the ratio is set so that the zero steering wheel angular position will be maintained. This is handled in a similar fashion, if the ratio is above the target one, as it can be during a mode change.

For the steering operation illustrated by arrow 4, in figure 6, the requested road wheel angle is within the ability of the AFS actuator. The ratio is reduced because of reduced availability during the steering operation illustrated by arrow 3. The steering ratio will be maintained, resulting in a final position at zero road wheel angle for zero steering wheel angle.

Variable Steering Ratio may vary with many parameters. Some of them are listed below:

- Vehicle speed.
- Vehicle acceleration and/or deceleration, i.e. the derivative of the vehicle speed.
- Steering wheel angle, rack position, road wheel angle or any other measure indicating steering position within the steering system.
- Angular velocity or velocity of any of the measures mentioned in the point above, i.e. the derivative of any measure indicating steering position within the steering system.

The algorithm may be used together with all of them.

The algorithm uses the target steering ratio,

$$i_{target} = f(...)$$

i.e. the target steering ratio is a function at least one of the parameters mentioned in the list above. The maximum and minimum allowed ratio, respectively, must also be defined as a function of the parameters mentioned,

$$i_{max} = f(...)$$

and

$$i_{min} = f(\ldots).$$

φ is the steering wheel angle.
Now, the reduction in the steering ratio is a function of the error, ε,

$$\Delta i = f(\varepsilon, \ldots),$$

and the error may be:

- The difference between the requested steering measure and the actual one.
- The difference between the requested steering measure and the ability of the CSR and/or PAS transformed to the same coordinate.
- The difference between the requested steering measure and the measure after arbitration between the variable steering ratio function and other functions using the CSR and/or PAS actuators.

The function for Δ*i* must be such that Δ*i* only reflects errors in the same direction as the steering wheel velocity. The reduction may be the saturated value (between zero and infinity or between any value and any value) of the error times the sign of the steering wheel angular velocity, and all this multiplied by a gain (that also contains the time step length) or a function. The reduction may also contain filters and a threshold value.
The reduction function may also be a function of e.g. the steering wheel angle. The change in ratio for one time step then becomes:

$$i_{t+1} = \max(i_{min}; \min(i_{\max}; i_t + \frac{i_{target} - i_t}{\varphi_{t+1}} \Delta\varphi + \sum_{k=1}^{n} \frac{\partial i}{\partial x_k} \Delta x_k - \Delta i)),$$

where k is the number of the steering ratio parameter, n is the number of the last steering ratio parameter, φ is the steering wheel angle, Δ*i* is the change in ratio and x is the steering ratio parameter. Now, the sum in the algorithm above may be changed to increase the recovery after a reduction of the steering ratio by saturating one or more of the terms in the sum. The saturation may be from zero to infinity or between any value and any value.
As an alternative, the lag may be reduced by introducing a function that adds a road wheel angle dependent on the steering wheel velocity. The problem with such a solution is that there is no coupling between when it is needed and when it is active. That means that the intervention will either be small or interfere with the desired vehicle response.
To increase the predictability of the vehicle response, the algorithm may be limited to handle the following:

- The steering ratio must stay between a minimum and a maximum value, where those values vary with the parameters mentioned in the previous list.
- Max deviation in steering ratio for steering inwards (movement of the steering wheel towards the center angular position) and outwards (movement of the steering wheel towards one of the end stops).
- Max change of steering ratio when passing through the center angular position of the steering wheel.

The steering ratio must also work at the end stops, i.e. when there are differences between the requested measure and the actual one owing to limited steering at the end stops.
Figures 7 and 8 exemplify the algorithm behind the solution of maximizing the ratio changes. The abbreviations used are Steering Wheel Angle (SWA) and Road Wheel Angle (RWA). In the case of other concepts (mentioned in the introduction), RWA can be switched to e.g. Curvature.
In figure 7 the ratio is NOT limited in the area illustrated by arrow 5 and the requested road wheel angle is within the ability of the CSR actuator. In the area illustrated by arrow 6, the abilities of the CSR actuator are reduced to reflect the availability of the actuator, as the requested road wheel angular velocity is above the ability of the CSR

actuator. In the area illustrated by arrow 7, the abilities are OK. The requested road wheel angle is within the ability of the CSR actuator again. That means that arrow 7 should follow the line 8 if the steering is turned outwards, and the dashed minimum ratio line for steering wheel movement inwards. The angle between these two lines must be limited. Otherwise, the responsiveness will differ too abrupt at transitions between the two cases.

In figure 8 the requested road wheel angle is within the ability of the CSR actuator in the area illustrated by arrow 9. In the area illustrated by arrow 10 the requested road wheel angular velocity is above the ability of the CSR actuator. The ratio is reduced to reflect the availability of the actuator. In the area illustrated by arrow 11 the requested road wheel angle is within the ability of the CSR actuator again. The ratio is kept for steering wheel movement inwards so that the resulting zero position of the steering wheel match straight line driving. Finally, in the area illustrated by the arrow 12 the requested road wheel angle is still within the ability of the CSR actuator. That means that arrow 12 should follow the target ratio. The angle between this line and the line of arrow 11 must be limited. Otherwise, the responsiveness will differ too abrupt at transitions between the two cases.

These limitations described with reference to figures 7 and 8 can be achieved through saturating the algorithm as illustrated below:

$$i_{t+1} = \max(i_{min}; \min(i_{\max}; i_t + \frac{sat(i_{target} - i_t)}{\varphi_{t+1}} \Delta\varphi + \sum_{k=1}^{n} \frac{\partial i}{\partial x_k} \Delta x_k - \Delta i)),$$

In accordance with the present invention an automotive vehicle is also envisaged, which comprises a system for controllable steering response in an automotive vehicle as described above. Hereby the vehicle is provided with Controllable Steering Response where the lag between requested steerable road wheel angles and actual steerable road wheel angles is reduced and the occurrence of any conflict where the steerable road wheels are still turning in one direction when the steering wheel is actually being turned in the opposite direction is eliminated.

The invention is limited to the following claims.

## Claims

1. A system for controllable steering response in an automotive vehicle having a steering system where a ratio i between a turn angle of the steerable road wheels of said automotive vehicle and a steering wheel (15) angle can be altered by means of a differential angle actuator (13), **characterized in that** control of said differential angle actuator (13) is based on calculations performed by means of an algorithm for determining the change in said ratio *i* over discrete time steps, wherein the change in ratio for one such time step is

$$\dot{i}_{t+1} = \max(i_{min}; \min(i_{\max}; i_t + \frac{i_{target} - i_t}{\varphi_{t+1}} \Delta\varphi + \sum_{k=1}^{n} \frac{\partial i}{\partial x_k} \Delta x_k - \Delta i)),$$

where k is the number of the steering ratio parameter, n is the number of the last steering ratio parameter, φ is the steering wheel (15) angle, $\Delta i$ is the change in ratio, and x is the steering ratio parameter, and the target steering ratio $i_{target}$, the maximum allowed ratio $i_{max}$ and the minimum allowed ratio $i_{min}$ are functions of the parameters vehicle speed and the derivative of said vehicle speed, and any measure indicating steering position within the steering system and the derivative of said measure.

2. A system for controllable steering response in an automotive vehicle according to claim 1,
**characterized in that** said ratio *i* is limited between a minimum and a maximum value, which minimum and maximum values may vary with the parameters vehicle speed and the derivative of said vehicle speed, and any measure indicating steering position within the steering system and the derivative of said measure.

3. A system for controllable steering response in an automotive vehicle according to claim 1 or claim 2,
**characterized in that** the difference between the steering ratio during movement of a steering wheel (15) of said steering system in a first direction towards a center angle of a steering wheel (15) of said steering system, and the steering ratio during movement of said steering wheel (15) in a second direction towards one of a pair of end stops of said steering system is limited in order to avoid abrupt changes in the responsiveness of the steering system during transitions between said first and said second directions.

4. A system for controllable steering response in an automotive vehicle according to any one of claims 1 to 3, **characterized in that** the change of steering ratio, when during movement of a steering wheel (15) of said steering system passing through a center angle of a steering wheel (15) of said steering system, is limited in order to avoid abrupt changes in the responsiveness of the steering system when passing through said center angle.

5. A system for controllable steering response in an automotive vehicle according to any one of claims 1 to 4, **characterized in that** a reduction in said steering ratio $\Delta i$ is a function of an error, $\varepsilon$, where said error is a difference between a requested steering measure and an actual one.

6. A system for controllable steering response in an automotive vehicle according to any one of claims 1 to 4, **characterized in that** a reduction in said steering ratio $\Delta i$ is a function of an error, $\varepsilon$, where said error is a difference between a requested steering measure and abilities of a controllable steering response actuator (13) and a power assisted steering actuator (14) transformed to the same coordinate.

7. A system for controllable steering response in an automotive vehicle according to any one of claims 1 to 4, **characterized in that** a reduction in said steering ratio $\Delta i$ is a function of an error, $\varepsilon$, where said error is a difference between a requested steering measure and an ability of a controllable steering response actuator (13) or a power assisted steering actuator (14) transformed to the same coordinate.

8. A system for controllable steering response in an automotive vehicle according to any one of claims 1 to 4, **characterized in that** a reduction in said steering ratio $\Delta i$ is a function of an error, $\varepsilon$, where said error is a difference between a requested steering measure and a measure after arbitration between a variable steering ratio function and functions for steering angle control and steering power assistance using a controllable steering response actuator (13) and a power assisted steering actuator (14).

9. A system for controllable steering response in an automotive vehicle according to any one of claims 1 to 4, **characterized in that** a reduction in said steering ratio $\Delta i$ is a function of an error, $\varepsilon$, where said error is a difference between a requested steering measure and a measure after arbitration between a variable steering ratio function and functions for steering angle control or steering power assistance using a controllable steering response actuator (13) or power assisted steering actuator (14).

10. A system for controllable steering response in an automotive vehicle according to any one of the preceding claims, **characterized in that** it further comprises means for saturating one or more of the terms

$$\frac{\partial i}{\partial x_k} \Delta x_k$$

in the sum of said algorithm from zero to infinity or from negative numbers to infinity.

11. A system for controllable steering response in an automotive vehicle according to any one of the preceding claims, **characterized in that** the change In steering ratio is limited when there is a difference between a requested steering measure and an available one owing to limited steering capabilities close to either one of a pair of end stops of said steering system.

12. A system for controllable steering response in an automotive vehicle according to any one of the preceding claims, **characterized in that** the allowed steering ratio change is reduced during retardation.

13. An automotive vehicle, **characterized in that** it comprises a system for controllable steering response in an automotive vehicle according to any one of the preceding claims.

14. A method for providing controllable steering response in an automotive vehicle having a steering system where a ratio *i* between a turn angle of the steerable road wheels of said automotive vehicle and a steering wheel (15) angle can be altered by means of a differential angle actuator (13), **characterized in that** calculations are performed by means of an algorithm for determining the change in said ratio i over discrete time steps, wherein the change in ratio for one such time step is

$$i_{t+1} = \max(i_{min}; \min(i_{\max}; i_t + \frac{i_{target} - i_t}{\varphi_{t+1}} \Delta\varphi + \sum_{k=1}^{n} \frac{\partial i}{\partial x_k} \Delta x_k - \Delta i)),$$

where k is the number of the steering ratio parameter, n is the number of the last steering ratio parameter, φ is the steering wheel (15) angle, $\Delta i$ is the change in ratio, and x is the steering ratio parameter, and the target steering ratio $i_{target}$, the maximum allowed ratio $i_{max}$ and the minimum allowed ratio $i_{min}$ are functions of the parameters vehicle speed and the derivative of said vehicle speed, and any measure indicating steering position within the steering system and the derivative of said measure, and control of said differential angle actuator (13) is based on said calculations.

## Patentansprüche

1. System für steuerbare Lenkreaktion in einem Kraftfahrzeug, das ein Lenksystem besitzt, in dem ein Verhältnis *i* zwischen einem Einschlagwinkel der lenkbaren Fahrbahnräder des Kraftfahrzeugs und einem Winkel des Lenkrades (15) mittels eines Differenzialwinkelaktors (13) geändert werden kann, **dadurch gekennzeichnet, dass** die Steuerung des Differenzialwinkelaktors (13) auf Berechnungen basiert, die mittels eines Algorithmus zum Bestimmen der Änderung des Verhältnisses *i* über diskrete Zeitschritte ausgeführt werden, wobei die Änderung des Verhältnisses für einen solchen Schritt gegeben ist durch

$$i_{t+1} = max\left(i_{min}; min\left(i_{max}; i_t + \frac{i_{target} - i_t}{\varphi_{t+1}} \Delta\varphi + \sum_{k=1}^{n} \frac{\partial i}{\partial x_k} \Delta x_k - \Delta i\right)\right),$$

wobei *k* die Nummer des Lenkverhältnisparameters ist, *n* die Nummer des letzten Lenkverhältnisparameters ist, φ der Winkel des Lenkrades (15) ist, $\Delta i$ die Änderung des Verhältnisses ist und *x* der Lenkverhältnisparameter ist und das Soll-Lenkverhältnis $i_{target}$, das maximal zulässige Verhältnis $i_{max}$ und das minimal zulässige Verhältnis $i_{min}$ Funktionen der Parameter der Fahrgeschwindigkeit und der Ableitung der Fahrgeschwindigkeit und irgendeines Maßes, das die Lenkposition in dem Lenksystem angibt, und der Ableitung des Maßes sind.

2. System für steuerbare Lenkreaktion in einem Kraftfahrzeug nach Anspruch 1,
**dadurch gekennzeichnet, dass** das Verhältnis *i* auf einen Bereich zwischen einem minimalen und einem maximalen Wert eingeschränkt ist, wobei sich der minimale Wert und der maximale Wert mit den Parametern der Fahrgeschwindigkeit und der Ableitung der Fahrgeschwindigkeit sowie mit irgendeinem Maß, das die Lenkposition in dem Lenksystem angibt, und mit der Ableitung des Maßes verändern können.

3. System für steuerbare Lenkreaktion in einem Kraftfahrzeug nach Anspruch 1 oder Anspruch 2,
**dadurch gekennzeichnet, dass** die Differenz zwischen dem Lenkverhältnis während der Bewegung eines Lenkrades (15) des Lenksystems in einer ersten Richtung hin zu einem Mittenwinkel eines Lenkrades (15) des Lenksystems und dem Lenkverhältnis während der Bewegung des Lenkrades (15) in einer zweiten Richtung hin zu einem von zwei Endanschlägen des Lenksystems begrenzt ist, um plötzliche Änderungen des Ansprechvermögens des Lenksystems während Übergängen zwischen der ersten und der zweiten Richtung zu vermeiden.

4. System für steuerbare Lenkreaktion in einem Kraftfahrzeug nach einem der Ansprüche 1 bis 3,
**dadurch gekennzeichnet, dass** die Änderung des Lenkverhältnisses während der Bewegung eines Lenkrades (15) des Lenksystems durch einen Mittenwinkel eines Lenkrades (15) des Lenksystems begrenzt ist, um plötzliche Änderungen des Ansprechvermögens des Lenksystems beim Durchgang durch den Mittenwinkel zu vermeiden.

5. System für steuerbare Lenkreaktion in einem Kraftfahrzeug nach einem der Ansprüche 1 bis 4,
**dadurch gekennzeichnet, dass** eine Verringerung des Lenkverhältnisses $\Delta i$ eine Funktion eines Fehlers ε ist, wobei der Fehler eine Differenz zwischen einem angeforderten Lenkmaß und einem tatsächlichen Lenkmaß ist.

6. System für steuerbare Lenkreaktion in einem Kraftfahrzeug nach einem der Ansprüche 1 bis 4,
**dadurch gekennzeichnet, dass** eine Verringerung des Lenkverhältnisses $\Delta i$ eine Funktion eines Fehlers ε ist, wobei der Fehler eine Differenz zwischen einem angeforderten Lenkmaß und Fähigkeiten eines steuerbaren Lenkreaktionsaktors (13) und eines auf dieselbe Koordinate transformierten Servolenkaktors (14) ist.

**7.** System für steuerbare Lenkreaktion in einem Kraftfahrzeug nach einem der Ansprüche 1 bis 4,
**dadurch gekennzeichnet, dass** eine Verringerung des Lenkverhältnisses $\Delta i$ eine Funktion eines Fehlers $\varepsilon$ ist, wobei der Fehler eine Differenz zwischen einem angeforderten Lenkmaß und einer Fähigkeit eines steuerbaren Lenkreaktionsaktors (13) oder eines auf dieselbe Koordinate transformierten Servolenkaktors (14) ist.

**8.** System für steuerbare Lenkreaktion in einem Kraftfahrzeug nach einem der Ansprüche 1 bis 4,
**dadurch gekennzeichnet, dass** eine Verringerung des Lenkverhältnisses $\Delta i$ eine Funktion eines Fehlers $\varepsilon$ ist, wobei der Fehler eine Differenz zwischen einem angeforderten Lenkmaß und einem Maß nach der Entscheidung zwischen einer Funktion für variables Lenkverhältnis und Funktionen für die Lenkwinkelsteuerung und die Servolenkunterstützung unter Verwendung eines steuerbaren Lenkreaktionsaktors (13) und eines Servolenkaktors (14) ist.

**9.** System für steuerbare Lenkreaktion in einem Kraftfahrzeug nach einem der Ansprüche 1 bis 4,
**dadurch gekennzeichnet, dass** eine Verringerung des Lenkverhältnisses $\Delta i$ eine Funktion eines Fehlers $\varepsilon$ ist, wobei der Fehler eine Differenz zwischen einem angeforderten Lenkmaß und einem Maß nach der Endscheidung zwischen einer Funktion für variables Lenkverhältnis und Funktionen für die Lenkwinkelsteuerung oder die Servolenkunterstützung unter Verwendung eines steuerbaren Lenkreaktionsaktors (13) oder eines Servolenkaktors (14) ist.

**10.** System für steuerbare Lenkreaktion in einem Kraftfahrzeug nach einem der vorhergehenden Ansprüche,
**dadurch gekennzeichnet, dass** es ferner Mittel zum Sättigen eines oder mehrerer der folgenden Terme

$$\frac{\partial i}{\partial x_k} \Delta x_k$$

in der Summe des Algorithmus von 0 bis Unendlich oder von negativen Zahlen bis Unendlich umfasst.

**11.** System für steuerbare Lenkreaktion in einem Kraftfahrzeug nach einem der vorhergehenden Ansprüche,
**dadurch gekennzeichnet, dass** die Änderung des Lenkverhältnisses begrenzt ist, wenn auf Grund begrenzter Lenkfähigkeiten in der Nähe eines der zwei Endanschläge des Lenksystems eine Differenz zwischen einem angeforderten Lenkmaß und einem verfügbaren Lenkmaß vorhanden ist.

**12.** System für steuerbare Lenkreaktion in einem Kraftfahrzeug nach einem der vorhergehenden Ansprüche,
**dadurch gekennzeichnet, dass** die zulässige Lenkverhältnisänderung während der Rückstellung verringert ist.

**13.** Kraftfahrzeug, **dadurch gekennzeichnet, dass** es ein System für steuerbare Lenkreaktion in einem Kraftfahrzeug nach einem der vorhergehenden Ansprüche enthält.

**14.** Verfahren zum Schaffen einer steuerbaren Lenkreaktion in einem Kraftfahrzeug, das ein Lenksystem besitzt, in dem ein Verhältnis *i* zwischen einem Lenkwinkel der lenkbaren Fahrbahnräder des Kraftfahrzeugs und einem Winkel eines Lenkrades (15) mittels eines Differenzialwinkelaktors (13) geändert werden kann, **dadurch gekennzeichnet, dass** mittels eines Algorithmus zum Bestimmen der Änderung des Verhältnisses *i* in diskreten Zeitschritten Berechnungen ausgeführt werden, wobei die Änderung des Verhältnisses für einen solchen Schritt gegeben ist durch

$$i_{t+1} = max\left( i_{min}; min\left( i_{max}; i_t + \frac{i_{target} - i_t}{\varphi_{t+1}} \Delta\varphi + \sum_{k=1}^{n} \frac{\partial i}{\partial x_k} \Delta x_k - \Delta i \right)\right),$$

wobei *k* die Nummer des Lenkverhältnisparameters ist, *n* die Nummer des letzten Lenkverhältnisparameters ist, $\varphi$ der Winkel des Lenkrades (15) ist, $\Delta i$ die Änderung des Verhältnisses ist und *x* der Lenkverhältnisparameter ist, und das Soll-Lenkverhältnis $i_{target}$, das maximal zulässige Verhältnis $i_{max}$ und das minimal zulässige Verhältnis $i_{min}$ Funktionen der Parameter der Fahrgeschwindigkeit und der Ableitung der Fahrgeschwindigkeit sowie irgendeines Maßes, das die Lenkposition in dem Lenksystem angibt, und der Ableitung des Maßes sind und wobei die Steuerung des Differenzialwinkelaktors (13) auf diesen Berechnungen basiert.

## Revendications

1. Système de réponse de direction réglable sur un véhicule automobile comprenant un système de direction dans lequel un rapport i entre un angle de braquage des roues orientables dudit véhicule automobile et un angle d'un volant de direction (15) peut être modifié au moyen d'un actuateur à angle différentiel (13), **caractérisé en ce que** la commande dudit actuateur à angle différentiel (13) est basée sur des calculs exécutés au moyen d'un algorithme pour déterminer le changement dans ledit rapport i au cours de périodes de temps discrètes, dans lequel le changement dans le rapport pour une de ces périodes de temps est :

$$i_{t+1} = \max(i_{min}; \min(i_{\max}; i_t + \frac{i_{t\,target} - i_t}{\varphi_{t+1}} \Delta\varphi + \sum_{k=1}^{n} \frac{\partial i}{\partial x_k} \Delta x_k - \Delta i)),$$

où k est le numéro du paramètre du rapport de direction, n est le numéro du paramètre du dernier rapport de direction, φ est l'angle du volant de direction (15), Δi est le changement dans le rapport, et x est le paramètre du rapport de direction, et le rapport de direction cible $i_{target}$, le rapport maximum autorisé $i_{max}$ et le rapport minimum autorisé $i_{min}$ sont des fonctions des paramètres de la vitesse du véhicule et du dérivé de ladite vitesse du véhicule, ainsi que de toute mesure indiquant une position de direction à l'intérieur du système de direction et du dérivé de ladite mesure.

2. Système de réponse de direction réglable sur un véhicule automobile selon la revendication 1,
**caractérisé en ce que** ledit rapport i est limité entre une valeur minimum et une valeur maximum, ces valeurs minimum et maximum pouvant varier avec les paramètres de la vitesse du véhicule et du dérivé de ladite vitesse du véhicule, ainsi que de toute mesure indiquant une position de direction à l'intérieur du système de direction et du dérivé de ladite mesure.

3. Système de réponse de direction réglable sur un véhicule automobile selon la revendication 1 ou 2,
**caractérisé en ce que** la différence entre le rapport de direction durant un mouvement d'un volant de direction (15) dudit système de direction dans une première direction vers un angle central d'un volant de direction (15) dudit système de direction, et le rapport de direction durant un mouvement dudit volant de direction (15) dans une deuxième direction vers l'une d'une paire de butées d'arrêt dudit système de direction est limité de façon à empêcher de brusques changements dans la réponse du système de direction au cours de transitions entre ladite première et ladite deuxième directions.

4. Système de réponse de direction réglable sur un véhicule automobile selon l'une quelconque des revendications 1 à 3,
**caractérisé en ce que** le changement du rapport de direction, durant un mouvement d'un volant de direction (15) dudit système de direction au moment du passage au travers d'un angle central d'un volant de direction (15) dudit système de direction, est limité de façon à empêcher de brusques changements dans la réponse du système de direction au moment du passage au travers dudit angle central.

5. Système de réponse de direction réglable sur un véhicule automobile selon l'une quelconque des revendications 1 à 4,
**caractérisé en ce qu'**une réduction dans ledit rapport de direction Δi est une fonction d'une erreur, ε, où ladite erreur est une différence entre une mesure de direction requise et une mesure réelle.

6. Système de réponse de direction réglable sur un véhicule automobile selon l'une quelconque des revendications 1 à 4,
**caractérisé en ce qu'**une réduction dans ledit rapport de direction Δi est une fonction d'une erreur, ε, où ladite erreur est une différence entre une mesure de direction requise et des capacités d'un actuateur de réponse de direction réglable (13) et d'un actuateur de direction assistée (14) transformée à la même coordonnée.

7. Système de réponse de direction réglable sur un véhicule automobile selon l'une quelconque des revendications 1 à 4,
**caractérisé en ce qu'**une réduction dans ledit rapport de direction Δi est une fonction d'une erreur, ε, où ladite erreur est une différence entre une mesure de direction requise et une capacité d'un actuateur de réponse de direction réglable (13) ou d'un actuateur de direction assistée (14) transformée à la même coordonnée.

8. Système de réponse de direction réglable sur un véhicule automobile selon l'une quelconque des revendications 1 à 4,
**caractérisé en ce qu'**une réduction dans ledit rapport de direction $\Delta i$ est une fonction d'une erreur, $\varepsilon$, où ladite erreur est une différence entre une mesure de direction requise et une mesure après un arbitrage entre une fonction de rapport de direction variable et des fonctions pour un réglage d'un angle de direction et une assistance en direction en utilisant un actuateur de réponse de direction réglable (13) et un actuateur de direction assistée (14).

9. Système de réponse de direction réglable sur un véhicule automobile selon l'une quelconque des revendications 1 à 4,
**caractérisé en ce qu'**une réduction dans ledit rapport de direction $\Delta i$ est une fonction d'une erreur, $\varepsilon$, où ladite erreur est une différence entre une mesure de direction requise et une mesure après un arbitrage entre une fonction de rapport de direction variable et des fonctions pour un réglage d'un angle de direction ou une assistance en direction en utilisant un actuateur de réponse de direction réglable (13) ou un actuateur de direction assistée (14).

10. Système de réponse de direction réglable sur un véhicule automobile selon l'une quelconque des revendications précédentes,
**caractérisé en ce qu'**il comprend par ailleurs des moyens pour saturer un ou plusieurs des termes :

$$\frac{\partial i}{\partial x_k} \Delta x_k$$

dans la somme dudit algorithme, de zéro à l'infini, ou bien de nombres négatifs à l'infini.

11. Système de réponse de direction réglable sur un véhicule automobile selon l'une quelconque des revendications précédentes,
**caractérisé en ce que** le changement dans le rapport de direction est limité quand il existe une différence entre une mesure de direction requise est une mesure disponible en raison de capacités de direction limitée proches de l'une quelconque d'une paire de butées d'arrêt dudit système de direction.

12. Système de réponse de direction réglable sur un véhicule automobile selon l'une quelconque des revendications précédentes, **caractérisé en ce que** le changement du rapport de direction autorisé est réduit au cours d'un retard.

13. Véhicule automobile, **caractérisé en ce qu'**il comprend un système de réponse de direction réglable sur un véhicule automobile selon l'une quelconque des revendications précédentes.

14. Procédé pour fournir une réponse de direction réglable sur un véhicule automobile comprenant un système de direction dans lequel un rapport i entre un angle de braquage des roues orientables dudit véhicule automobile et un angle d'un volant de direction (15) peut être modifié au moyen d'un actuateur à angle différentiel (13), **caractérisé en ce que** des calculs sont exécutés au moyen d'un algorithme pour déterminer le changement dans ledit rapport i au cours de périodes de temps discrètes, dans lequel le changement dans le rapport pour une de ces périodes de temps est :

$$i_{t+1} = \max(i_{min}; \min(i_{\max}; i_t + \frac{i_{t\,\mathrm{arg}et} - i_t}{\varphi_{t+1}} \Delta\varphi + \sum_{k=1}^{n} \frac{\partial i}{\partial x_k} \Delta x_k - \Delta i)),$$

où k est le numéro du paramètre du rapport de direction, n est le numéro du paramètre du dernier rapport de direction, $\varphi$ est l'angle du volant de direction (15), $\Delta i$ est le changement dans le rapport, et x est le paramètre du rapport de direction, et le rapport de direction cible $i_{target}$, le rapport maximum autorisé $i_{max}$ et le rapport minimum autorisé $i_{min}$ sont des fonctions des paramètres de la vitesse du véhicule et du dérivé de ladite vitesse du véhicule, ainsi que de toute mesure indiquant une position de direction à l'intérieur du système de direction et du dérivé de ladite mesure, et une commande dudit actuateur à angle différentiel (13) est basée sur lesdits calculs.

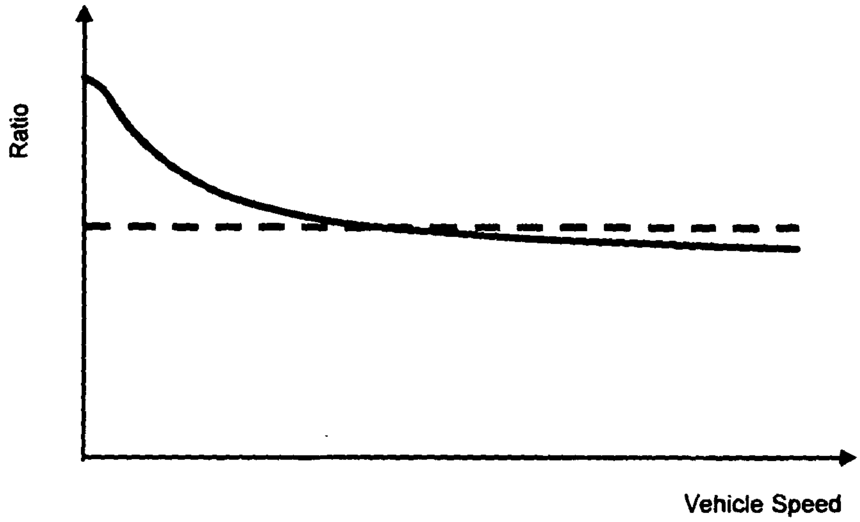


Fig. 1

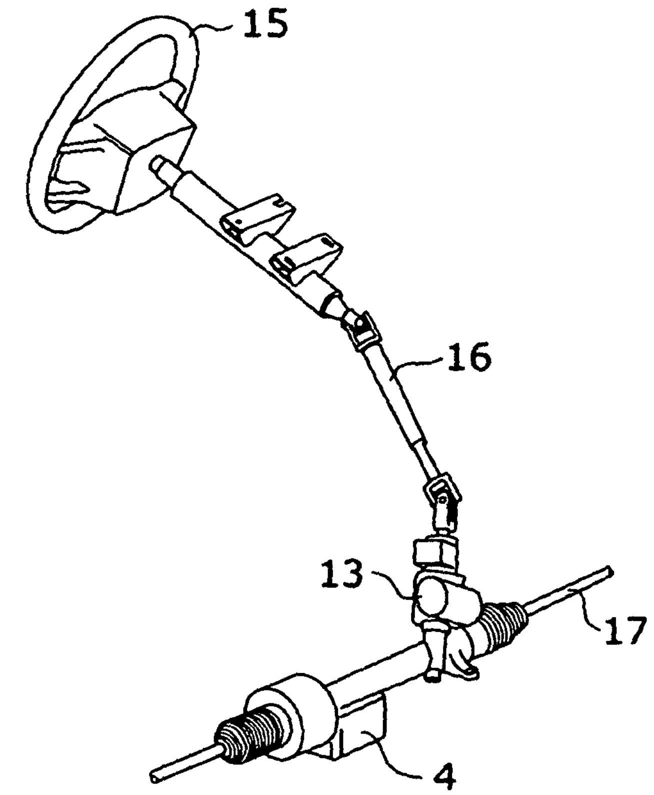


Fig. 2

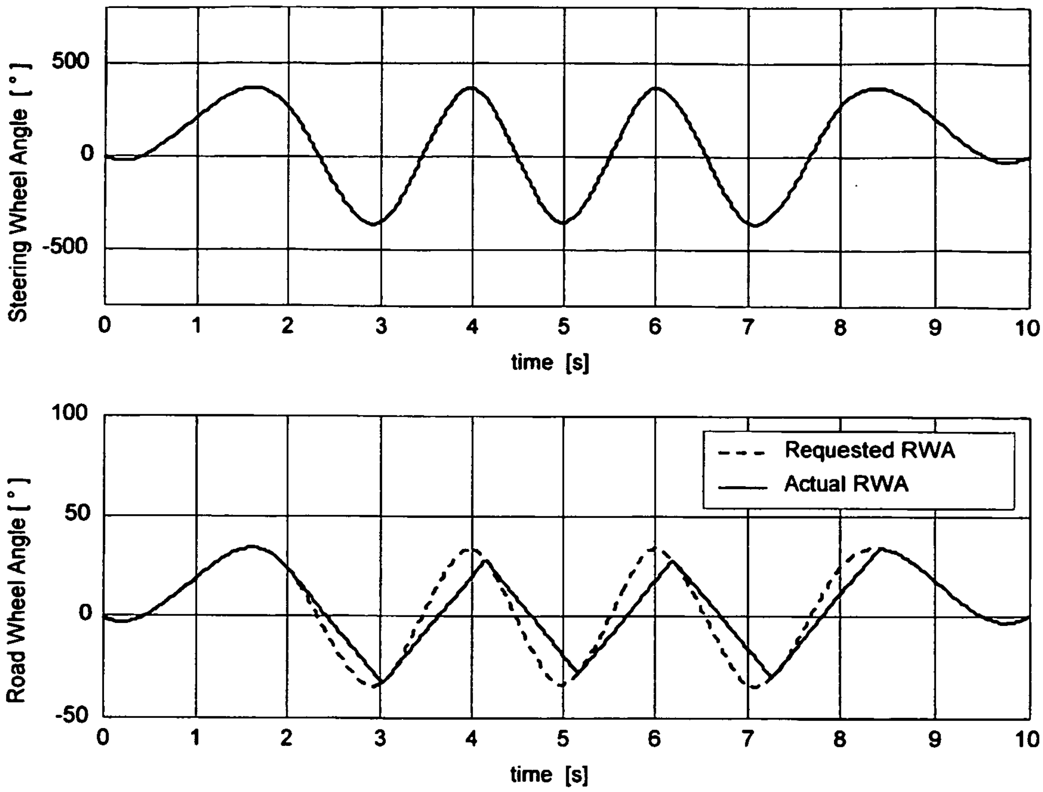
Steering Wheel Angle [ ° ]
500
0
-500
0 1 2 3 4 5 6 7 8 9 10
time [s]
Road Wheel Angle [ ° ]
100
50
0
-50
Requested RWA
Actual RWA
time [s]

Fig. 3

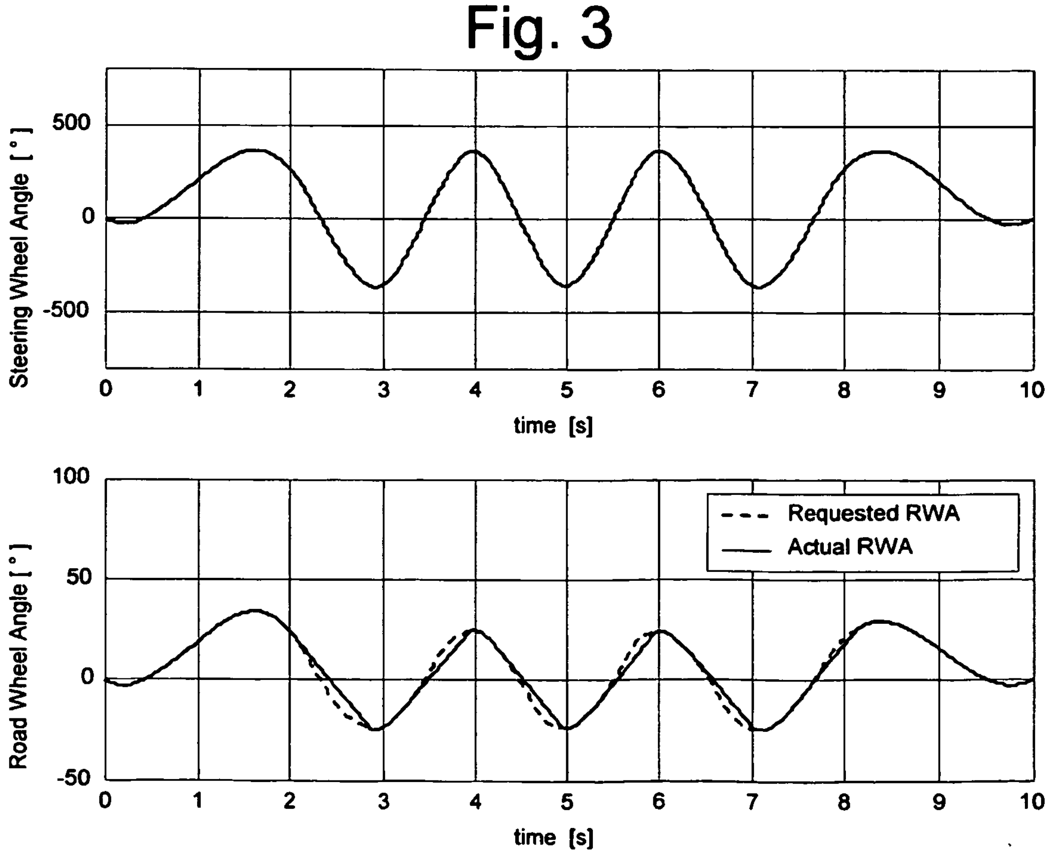
Steering Wheel Angle [ ° ]
500
0
-500
0 1 2 3 4 5 6 7 8 9 10
time [s]
Road Wheel Angle [ ° ]
100
50
0
-50
Requested RWA
Actual RWA
time [s]

Fig. 4

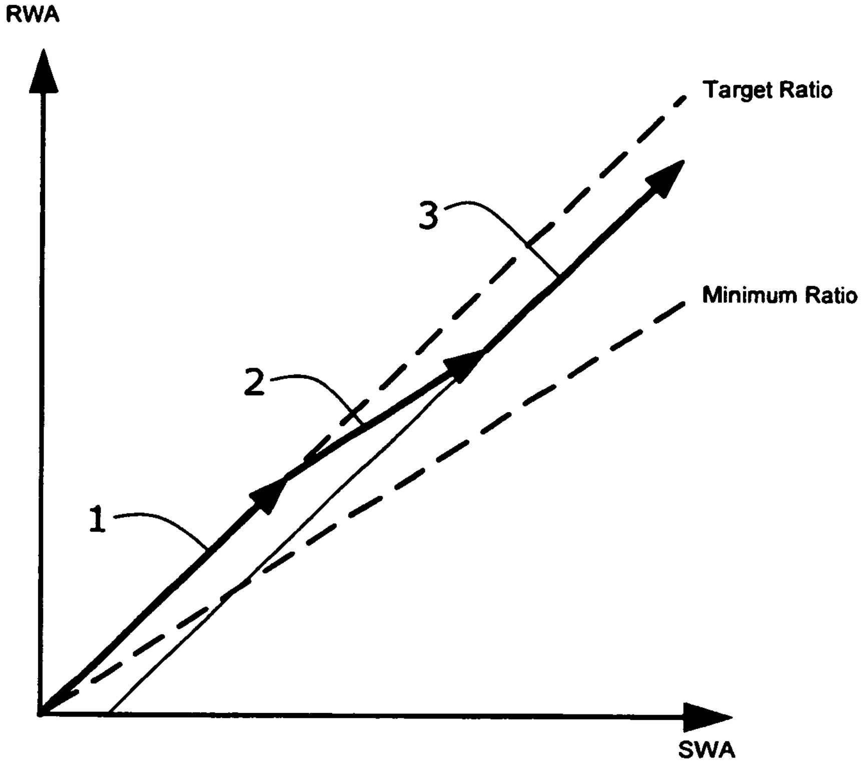
RWA
Target Ratio
3
Minimum Ratio
2
1
SWA

Fig. 5

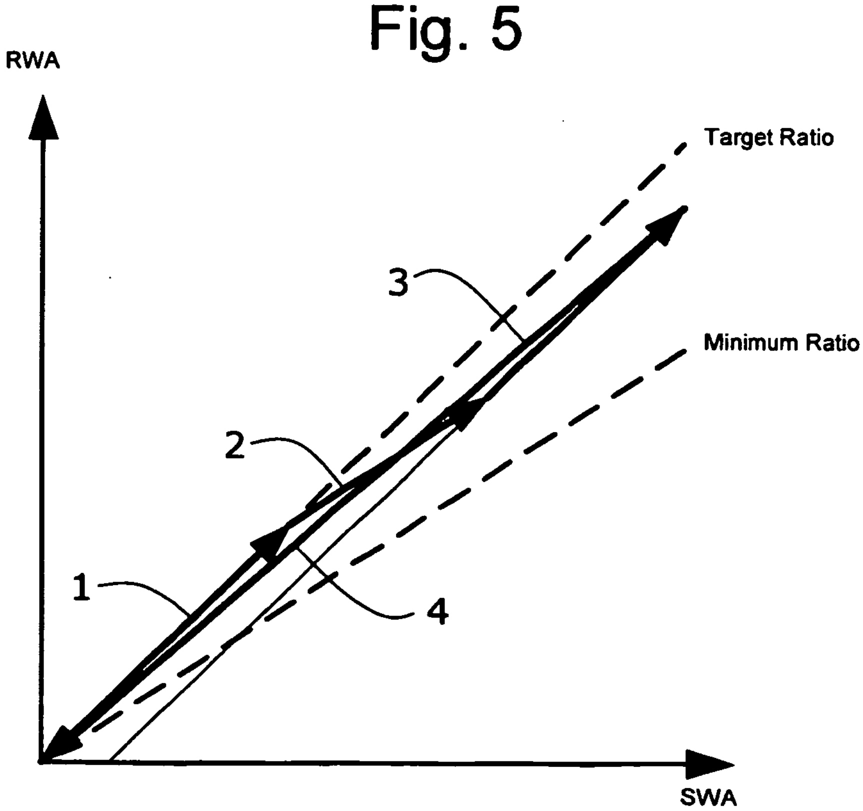
RWA
Target Ratio
3
Minimum Ratio
2
1
4
SWA

Fig. 6

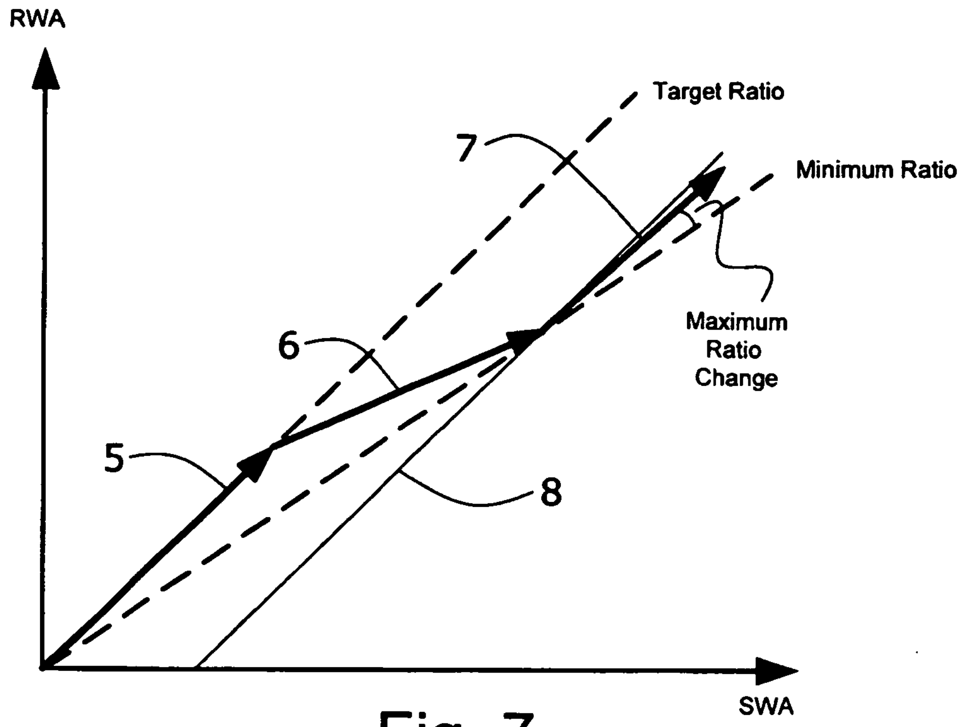
RWA
Target Ratio
7
Minimum Ratio
Maximum
Ratio
Change
6
5
8
SWA

Fig. 7

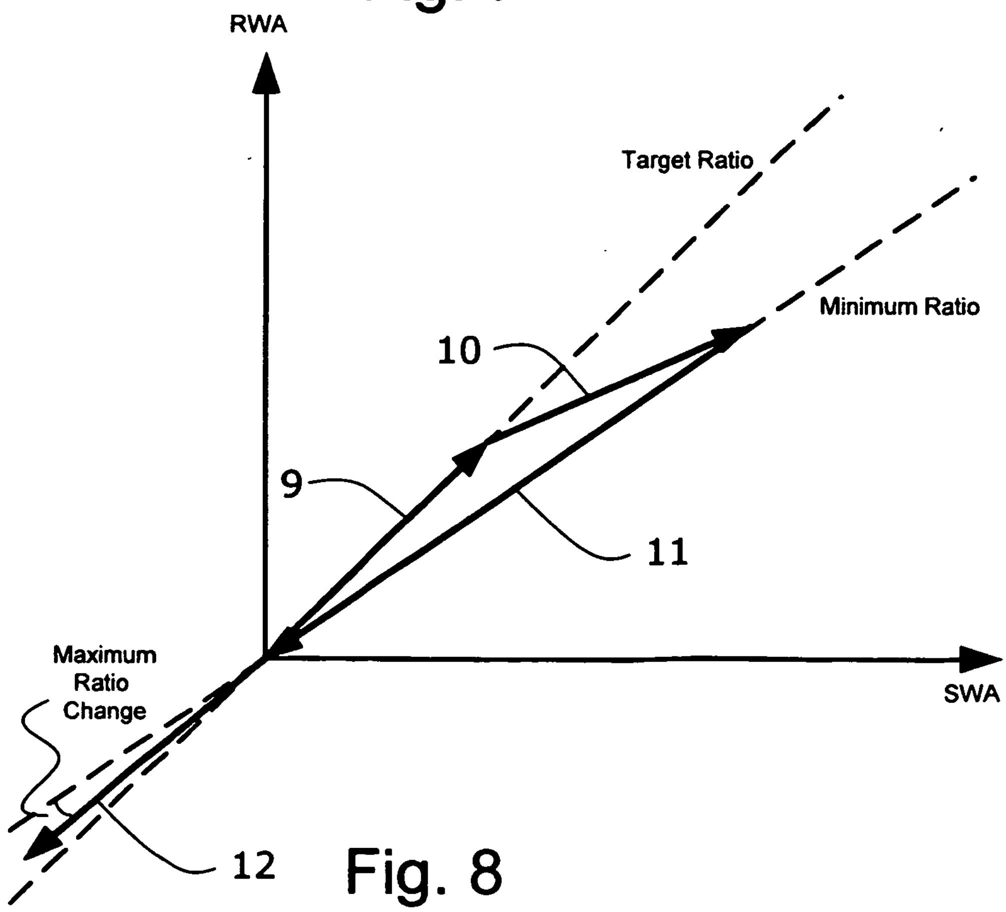
RWA
Target Ratio
Minimum Ratio
10
9
11
SWA
Maximum
Ratio
Change
12

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6523638 B
- EP 1394015 A
- EP 1325857 A